Europäisches Patentamt

European Patent Office

Office européen des brevets

(19)

(11) **EP 1 289 660 B1**

(12) **FASCICULE DE BREVET EUROPEEN**

(45) Date de publication et mention
de la délivrance du brevet:
**08.02.2006 Bulletin 2006/06**

(51) Int Cl.:
*B01L 3/02* (2006.01)   *B01J 19/00* (2006.01)
*B01L 3/00* (2006.01)

(21) Numéro de dépôt: **01945453.7**

(22) Date de dépôt: **15.06.2001**

(86) Numéro de dépôt international:
**PCT/FR2001/001873**

(87) Numéro de publication internationale:
**WO 2001/096019 (20.12.2001 Gazette 2001/51)**

(54) **SYSTEME DE DISTRIBUTION PARALLELE ET SELECTIVE DE MICRO-GOUTTELETTES A HAUT RENDEMENT**

PARALLELES UND SELEKTIVES HOCHLEISTUNGSVERTEILUNGSSYSTEM FÜR MIKROTRÖPFCHEN

HIGH-PERFORMANCE SYSTEM FOR PARALLEL AND SELECTIVE DISPENSING OF MICRO-DROPLETS

(84) Etats contractants désignés:
**AT BE CH CY DE DK ES FI FR GB GR IE IT LI LU MC NL PT SE TR**

(30) Priorité: **15.06.2000 CA 2311622**

(43) Date de publication de la demande:
**12.03.2003 Bulletin 2003/11**

(73) Titulaire: **Hoummady, Moussa**
**25000 Besançon (FR)**

(72) Inventeur: **Hoummady, Moussa**
**25000 Besançon (FR)**

(74) Mandataire: **Schwartz, Thierry J.**
**Cabinet ORES**
**36, rue de St Pétersbourg**
**75008 Paris (FR)**

(56) Documents cités:
**US-A- 4 680 595**      **US-A- 4 730 196**

• OENNERFJORD P ET AL: "PICOLITER SAMPLE PREPARATION IN MALDI-TOF MS USING A MICROMACHINED SILICON FLOW-THROUGH DISPENSER" ANALYTICAL CHEMISTRY, AMERICAN CHEMICAL SOCIETY. COLUMBUS, US, vol. 70, no. 22, 15 novembre 1998 (1998-11-15), pages 4755-4760, XP000799205 ISSN: 0003-2700
• BLANCHARD A P ET AL: "HIGH-DENSITY OLIGONUCLEOTIDE ARRAYS" BIOSENSORS & BIOELECTRONICS, ELSEVIER SCIENCE PUBLISHERS, BARKING, GB, vol. 11, no. 6/7, 26 avril 1996 (1996-04-26), pages 687-690, XP002052193 ISSN: 0956-5663

## Description

L'invention concerne un système de distribution parallèle et sélective, à haut rendement, de micro-gouttelettes de volume extrêmement réduit -de l'ordre d'un sous-multiple de nano-litre, voire d'un sous-multiple de pico-litre-, des cartouches transportables et un kit pour mettre en oeuvre une telle distribution, ainsi que les applications de ce système, notamment dans les domaines de la chimie, de la biologie, de la biotechnologie ou de la pharmacie, -en particulier pour la réalisation de bio-puces, pour des tests pharmaceutiques, immunologiques ou biochimiques, pour le criblage de chimiothèques ou de sérothèques, la préparation de médicaments ou leur administration percutanée par iono-phorèse, ou encore dans les domaines de la cosmétique, pour la réalisation de diffuseurs de parfums ou d'aérosols, de l'impression par jet d'encre ou de l'électronique automobile, en particulier dans les injecteurs de carburant ou de gas-oils.

Les récents progrès en matière de recherche génomique et protéomique permettent de disposer d'un nombre considérable de molécules biologiques et thérapeutiques à tester. Cependant, les faibles quantités de produits biochimiques disponibles ainsi que leur coût élevé ont conduit à rechercher une augmentation sensible des capacités d'expérimentation par optimisation du rendement.

Pour ce faire, différentes techniques ont été appliquées à la manipulation de liquides biochimiques, tels que les systèmes de repiquage ou de micro-pipetage avec des actionneurs piézoélectriques et, plus récemment, la technique d'impression par jet d'encre.

Le but dé ces technologies est la préparation de bio-puces par l'impression de sondes biologiques (d'oligonucléotides, protéines, peptides, etc..), pré-synthétisées dans la majorité des cas, sur une surface de différents types de support, tels que verre, nylon® ou cellulose®.

Il est par exemple connu des documents US 5,053,100 ou US 6,083,762, des pipetages qui utilisent un actionneur piézoélectrique sur une micro-pipette. Cette technique permet l'impression d'oligonucléotides pré-synthétisés ou synthétisés in situ. Cependant, ces systèmes sont fabriqués à l'unité et sont inaptes à la distribution parallèle à haute densité.

Dans le document US 6,028,189, la distribution de réactifs est effectuée par l'utilisation de micro-pompes de type à jet d'encre, activées par un actionneur piézoélectrique. Chaque micro-pompe est réalisée dans un bloc de silicium, avec des canaux d'alimentation et d'éjection des gouttelettes. Afin de réaliser des synthèses in situ, quatre micro-pompes délivrent des bases d'ADN par éjection dans des puits circulaires, formés sur un substrat de verre commandé en déplacement selon deux axes.

L'article du journal Analytical Chemistry, vol 70, n° 22, 15 novembre 1998, pages 4755 à 4760, décrit un micro-distributeur de gouttelettes dans lequel la déformation d'un élément bimorphe piézocéramique entraîne, par l'intermédiaire de billes de flexiglass, la déformation d'une membrane qui produit l'écoulement de liquide à travers un puits situé en regard. Cette technique suppose un bon contrôle de la déformation de l'élément piézocéramique et de la membrane.

Ces systèmes ne permettent pas de réaliser une impression à très haut rendement au sens de la présente invention, c'est-à-dire quelques centaines à quelques milliers de gouttes par $cm^2$ : avec quatre pompes opérant à quelques centaines de Hz, une machine selon le document précédent imprimerait 100 000 gouttes en quelques centaines de secondes. La synthèse de sondes de 25 oligonucléotides nécessiterait alors plus de 2 heures.

L'invention vise à permettre une augmentation considérable du rendement de distribution sélective de micro-gouttelettes, par une forte augmentation de la densité d'impressions parallèles, comparable aux densités obtenues par la photochimie pour l'immobilisation de molécules spécifiques à travers des masques de photolithographie. Cette méthode est limitée aux molécules pouvant être fixées par photochimie et ne permet fondamentalement pas de manipuler individuellement des gouttelettes de réactifs. De plus, la synthèse in situ, par cette méthode, est limitée à environ 25 mononucléotides. Un autre but de l'invention est de permettre de réaliser une sélectivité non seulement spatiale, en permettant de distribuer le réactif sur des sites prédéterminés ou programmés, mais également ciblée en distribuant un réactif sélectionné parmi plusieurs sur le site prédéterminé.

L'invention vise également à réaliser un système multifonctionnel et facile à adapter sous différentes formes, par exemple sous forme de kits miniatures d'analyse biologique ou biochimique pour permettre un grand nombre d'applications. En particulier, l'invention permet de ne pas se limiter à la synthèse de 25 nucléotides par sonde mais de synthétiser des sondes longues pouvant atteindre, par exemple, 70 nucléotides, tout en conservant un rendement élevé.

Ces buts sont atteints en utilisant une tête d'impression dans laquelle est réalisée, par des techniques de type microélectroniques à haute densité, une matrice de puits de forme particulière et alimentés suivant une connectique spécifique pour une distribution sélective à haut débit.

Plus précisément, l'invention a pour objet un système de distribution de micro-gouttelettes tel que défini par la revendication 1.

Selon l'invention, il convient de comprendre par distribution l'éjection ou l'aspiration de micro-gouttelettes, par haut rendement de quelques dizaines à quelques milliers de micro-gouttelettes distribuées parallèlement en une fraction de seconde, par paroi à symétrie axiale une paroi de révolution ou cylindrique, par exemple de section carrée, et par rapport de forme le rapport entre la hauteur et l'ouverture de la buse de sortie.

Pour atteindre ce type de rendement, le substrat présente une densité de puits pouvant atteindre 10 000 par cm², avec un débit pouvant dépasser 1 million de gouttelettes à la seconde.

Avantageusement, le matériau du substrat est choisi parmi les matériaux semi-conducteurs tels que le silicium, l'arséniure de gallium, le carbure de silicium, le germanium, les composites d'oxydes et d'isolant (tels que le SOI, initiales de silicium-oyde-isolant), les verres, les nitrures de silicium, le polysilicium, les céramiques, les matériaux thermoplastiques, -tels que le polyméthacrylate de méthyle, les polycarbonates, le polytetrafluoroethylene, le chlorure de polyvinyle ou le polydimethylsiloxane, les résines photosensibles épaisses ( par exemple la résine « SU8 »)-, ainsi que les métaux, tels que le tungstène ou les aciers inoxydables.

De manière préférée, les techniques de micro-fabrication pour réaliser les puits ou les micro-canaux sont choisies en fonction du matériau du substrat :

- gravures chimiques humides ou sèches telles que la gravure ionique réactive (en abrégé RIE) ou la gravure profonde (en abrégé D-RIE) pour le silicium et verre ;
- gravure par électroérosion ou électroformage pour les métaux ;
- moulage et polymérisation pour les matériaux thermoplastiques ;
- photolithographie, découpage au laser, ultrasons, ou par projection d'abrasifs pour la plupart des substrats.

Selon des modes préférés, le matériau de la membrane est choisi entre le verre, le silicium, les élastomères et les matériaux thermoplastiques; la membrane peut être gravée par les techniques de gravure citées plus haut, afin de réaliser un réseau de micro-canaux d'alimentation des puits, ces micro-canaux étant couplés en extrémité à au moins un réservoir d'alimentation en réactif.

Dans des modes de réalisation particuliers, les moyens de déformation locale de la membrane sont constitués par des actionneurs électromagnétiques, magnétostrictifs ou piézoélectriques. Des moyens alternatifs sont également prévus tels que les moyens thermiques de type jet d'encre ou thermoélastiques par effet de type bilame, l'électro-vaporisation produit par un champ électrique localisé entre chaque puits, ou encore des actionneurs électrostatiques.

L'ensemble des moyens de déformation peut être géré par une unité de commande programmable à travers un réseau de multiplexage. Une telle unité permet de déclencher simultanément ou successivement l'aspiration ou la distribution de réactifs identiques ou différents à travers tous les puits, à travers des blocs de puits ou certains puits.

Selon des modes de réalisation particuliers, la tête d'impression possède quatre ou un multiple de quatre lignes et un nombre de colonnes de puits adapté à la densité souhaitée, afin de procéder à la synthèse de sondes d'ADN à partir des quatre monomères de base des nucléotides pour la préparation de bio-puces. Les puits de chaque ligne sont alimentés par un même réservoir à travers un micro-canal formé dans la membrane parallèlement à la ligne de puits et couplé latéralement à la ligne ou orthogonalement au plan du substrat, les réservoirs étant gravés dans la membrane ou disposés à distance et reliés aux micro-canaux par des connexions souples.

L'invention concerne également les applications de la tête d'impression définie ci-dessus. Pour mettre en oeuvre au moins certaines d'entre elles, il est avantageux de préparer un ensemble prêt à l'emploi sous forme de :

- cartouche de distribution comprenant au moins une tête d'impression préremplie de réactifs et de plaquettes de titration en matériau semi-conducteur ou thermoplastique, pouvant présenter des micro-cuvettes formées par gravure de type micro-électronique, par usinage, par moulage, par thermoformage, ou toute technique adaptée à une telle fabrication ;
- kit de distribution comprenant au moins une tête d'impression, pouvant être équipée d'au moins une pompe d'aspiration, et au moins une plaquette de Titration, préremplies ou non de réactif.

Ces cartouches ou ces kits sont plus particulièrement destiné(e)s à la préparation de bio-puces, par synthèse in situ ou dépôt d'oligonucléotides pré-synthétisés, au criblage collectif ou individuel sur molécules biologiques ou sur cellules, à la préparation de médicaments ou aux tests pharmaceutiques ou de dépistage immunologique, biochimiques et biologiques.

L'administration percutanée de médicaments par iono-phorèse peut être réalisée à partir d'une tête d'impression définie précédemment comportant un plusieurs puits. Un système d'application d'une différence de potentiel adéquate sur une cellule piézoélectrique, ou tout moyen de déclenchement électromagnétique, forme un dispositif d'administration d'une quantité calibrée d'au moins un médicament contenu ou formé dans ce puits.

Outre les applications citées plus haut, l'invention peut également être utilisée pour la séparation et le tri, par exemple en chromatographie par filtration sélective. Sur les parois des puits d'une tête d'impression selon l'invention sont d'abord fixées, greffées, bloquées ou accrochées, par tout moyen connu, des bio-cellules identiques ou différentes par puits ou par blocs de puits. La tête d'impression peut être intégrée à l'embout d'une seringue.

D'autres caractéristiques, avantages et applications apparaîtront également dans la suite de la description qui détaille, plus particulièrement, des exemples de mise en oeuvre non limitatifs de la présente invention, en référence aux figures annexées qui représentent, respectivement :

- la figure 1, une vue schématique partielle en perspective d'une tête de distribution limitée à l'environnement d'un puits de base d'un système selon l'invention ;
- la figure 2, une vue en coupe selon II-II de la tête selon la figure 1 avec un réservoir de remplissage ;
- la figure 3, une vue schématique en perspective d'une tête de distribution d'un système selon l'invention à huit puits de distribution ;
- la figure 4, une vue en coupe selon IV-IV de la figure précédente ;
- la figure 5, une vue schématique en perspective d'une tête de distribution d'un système selon l'invention à seize puits de distribution ;
- la figure 6, une vue en coupe selon V-V de la figure précédente ;
- les figures 7 et 8, deux vues cavalières de la face inférieure de la tête de distribution du système selon la figure 5 et selon une variante ;
- la figure 9, une vue en perspective du système selon la figure 5 avec des moyens de distribution d'un réactif à distance;
- la figure 10, une vue en perspective du système selon la figure 5 avec des moyens de distribution à distance de quatre mononucléides pour former des sondes sur une lame mobile ;
- la figure 11, une vue en coupe schématique d'un système de distribution selon l'invention illustrant le principe d'actionnement sélectif des puits de distribution ;
- les figures 12a et 12b, des vues en coupe illustrant les deux phases d'actionnement d'un puits par des moyens électromagnétiques de déclenchement sélectif ;
- les figures 13a et 13b, une vue en coupe d'un système de distribution selon l'invention, illustrant l'actionnement sélectif respectivement par des moyens électromagnétiques et des moyens piézoélectriques de déclenchement sélectif;
- la figure 14, une vue en coupe d'une tête de distribution en phase de remplissage par aspiration de réactifs pour la préparation d'une cartouche de distribution selon l'invention ;
- la figure 15, une vue en coupe d'un système de distribution selon l'invention appliqué au traitement de cellules sur une plaquette de titration ;
- la figure 16, une vue en coupe d'un système de distribution selon l'invention appliqué à la détection d'hybridation dans le cadre d'un test génétique;
- la figure 17, une vue en coupe d'un système de distribution selon l'invention appliquée à l'administration percutanée de médicaments.

Sur toutes les figures, des signes de référence identiques désignent des éléments identiques ou techniquement équivalents. Les membranes apparaissent en transparence afin de faciliter la visualisation de l'ensemble des éléments représentés.

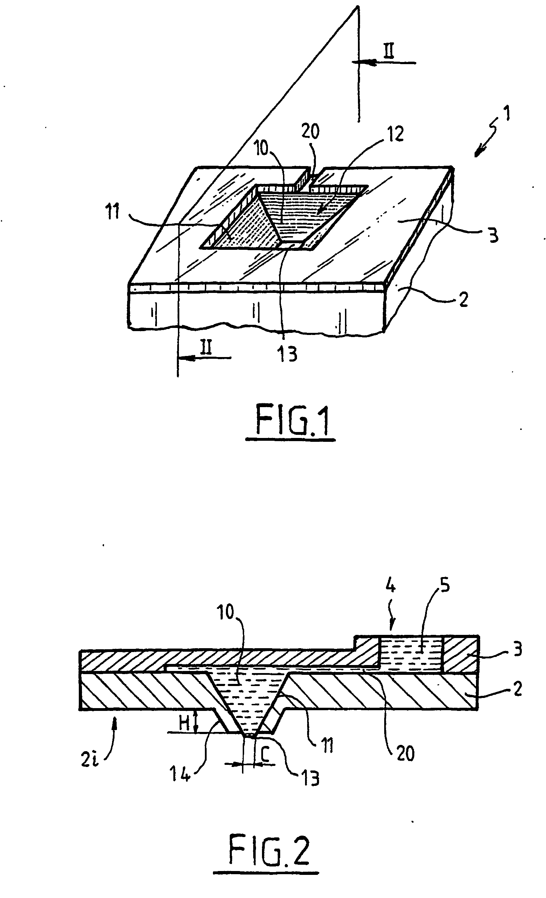

Un exemple de tête de distribution 1 est illustré en figure 1, telle que limitée à son environnement autour d'un puits de distribution 10. Chaque puits 10 a été gravé par photolithographie suivie d'une gravure humide chimique dans un substrat de silicium 2 recouvert d'une membrane 3 en pyrex® , la membrane et le substrat sont assemblés par soudure anodique pour former la tête 1.

Le puits 10 possède une forme pyramidale inversée, et traverse de part en part le substrat de silicium 2 selon quatre parois continûment inclinées 11 et définies par les plans cristallins 1-1-1 du silicium. L'ouverture supérieure 12 du puits, qui communique avec la membrane 3, forme un carré de côté supérieur au côté de l'orifice inférieure 13 afin d'accélérer l'éjection des gouttelettes. Un micro-canal 20 d'alimentation ou d'évacuation du puits en réactif est usiné dans la membrane 3.

Dans cet exemple de réalisation, les dimensions de puits sont les suivantes :

- côté de l'ouverture supérieure: $500\mu m$
- côté de l'orifice inférieur: entre 10 et 50 $\mu m$ (environ 30 $\mu m$)
- épaisseur de la membrane : 10 à 50 $\mu m$
- épaisseur du substrat : 360 $\mu m$

En vue en coupe selon la figure 2 selon II-II, il apparaît que le micro-canal 13 communique avec un réservoir d'alimentation ou de stockage 4 de réactif 5. Il est également montré sur cette vue que la face inférieure 2i sensiblement plane du substrat 2 forme saillie autour des parois latérales 11 du puits 10 de manière à prolonger ces parois en formant une buse 14. De telles buses sont obtenues par usinage de la face inférieure. La hauteur H d'une telle buse rapportée au côté C, côté de l'orifice 13, mesure le rapport de forme environ égal à 3 dans l'exemple, qui améliore la formation de micro-gouttelettes de volume de l'ordre du picolitre. La valeur du rapport de forme est limitée par des contraintes technologiques et un bon compromis est à rechercher entre 1 et 20, suivant le matériau et la technique de gravure utilisés. Par ailleurs, la distance moyenne entre deux puits est typiquement d'environ 550 $\mu m$.

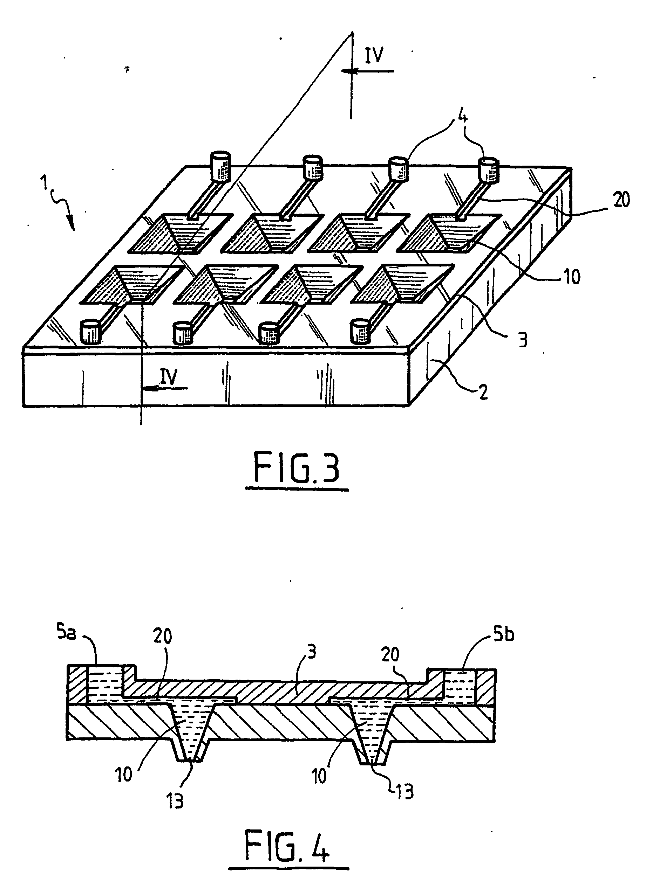

Sur la figure 3, la vue en perspective d'une tête de distribution 1 comporte huit puits 10 reliés individuellement à huit réservoirs 4 par huit micro-canaux 20. Les dimensions typiques d'une telle tête sont :

- longueur : 3mm
- largeur : 5mm
- épaisseur : 1 mm selon épaisseur des réservoirs

La vue en coupe représentée en figure 4, selon le plan IV-IV de la figure précédente, montre bien l'indépendance des réservoirs 4 permettant la distribution ou l'aspiration de réactifs différents 5a et 5b.

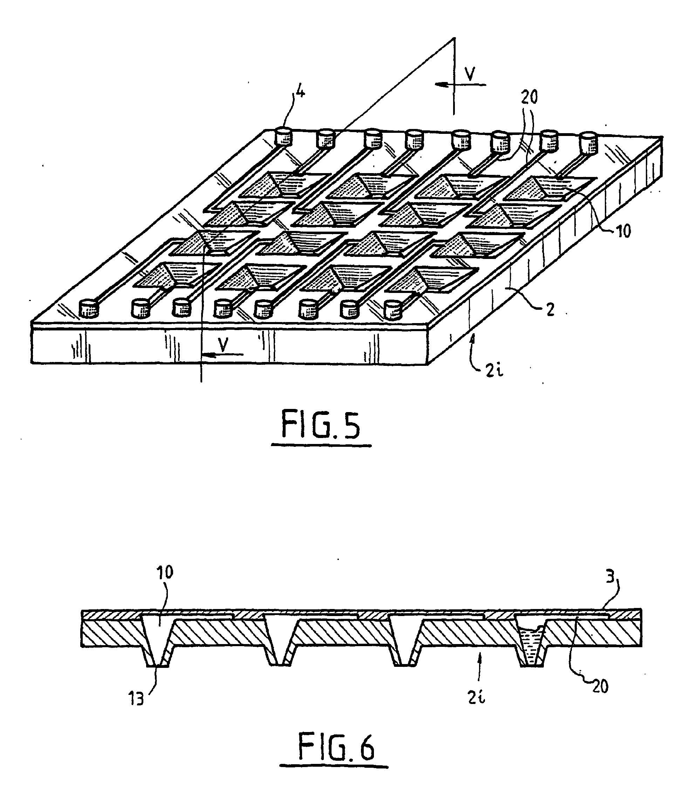

En variante, les figures 5 et 6 montrent, respectivement en vue cavalière et en coupe selon le plan V-V, une tête de distribution comportant seize puits 10 reliés individuellement à seize réservoirs 4 par seize micro-canaux 20. Une telle configuration est avantageusement utilisée pour distribuer seize réactifs différents.

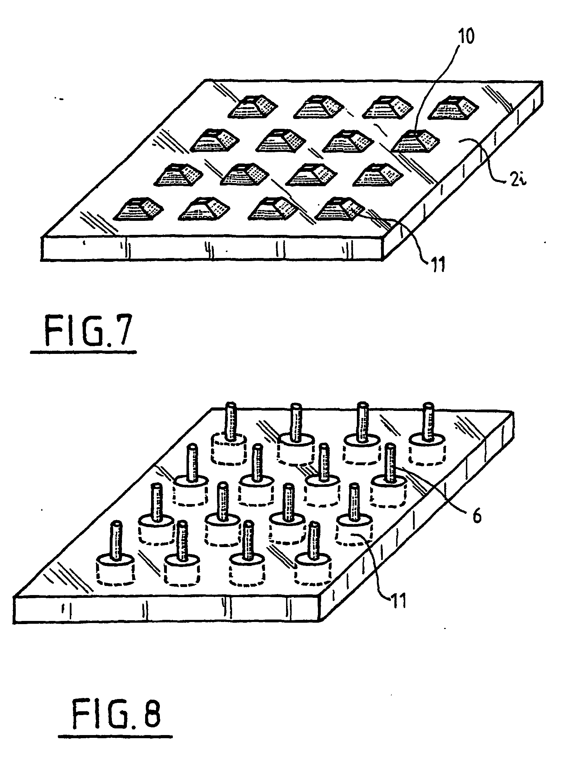

La face inférieure 2i sensiblement plane du substrat 2 de la tête de distribution des figures 5 et 6, est représentée en vue cavalière sur la figure 7 et en variante sur la figure 8. En figure 7, les parois des puits 10 apparaissent en saillie sous forme de pyramides. Cette forme inclinée des parois est avantageuse car le réactif ne risque pas de s'accumuler et donc de stagner. Par ailleurs du point de vue hydrodynamique, elle permet un meilleur écoulement avec une répartition des pressions et des vitesses de manière continue. En figure 8, ces mêmes parois 11 apparaissent en transparence sous une forme cylindrique, de diamètre égal à 100 microns, prolongée par un embout centré 6, également cylindrique et de diamètre de 20 microns.

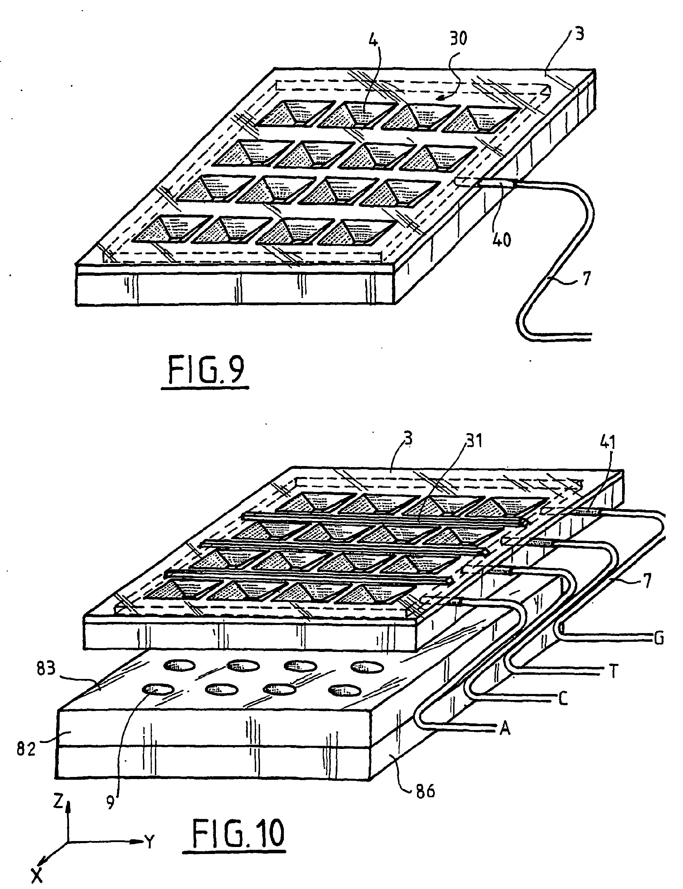

Lorsqu'un seul réactif est distribué ou aspiré simultanément à travers les puits, la configuration de membrane illustrée en figure 9 est avantageusement mise en oeuvre. Dans cette configuration, la membrane 3 possède une ouverture unique 30 qui permet d'alimenter ou d'aspirer un même réactif sur tous les puits 4 sans l'utilisation de micro-canaux. Ce réactif est transporté depuis ou aspiré vers un réservoir distant (non représenté) à travers un tuyau souple 7 couplé à un micro-capillaire unique 40 traversant la membrane 3.

Lorsque plusieurs réactifs sont distribués, par exemple quatre mononucléides A, C, T, G, dans le cas illustré par la vue en perspective de la figure 10, la membrane précédente est cloisonnée par trois traversées 31 de manière à former quatre conduits indépendants 32 d'alimentation ou d'aspiration des réactifs. Ces conduits sont reliés à quatre micro-capillaires 41 couplées, à travers la membrane 3 et quatre tuyaux souples 7, à quatre réservoirs distants (non représentés). Une telle configuration est particulièrement adaptée à la distribution des quatre nucléotides de base pour former des sondes 9 pour la préparation de micro-puces sur une lame 82 recouverte d'une couche de silane 83 pour permettre le greffage des premiers nucléides. La lame 82 est supportée par un dispositif de positionnement 86, selon les axes XYZ.

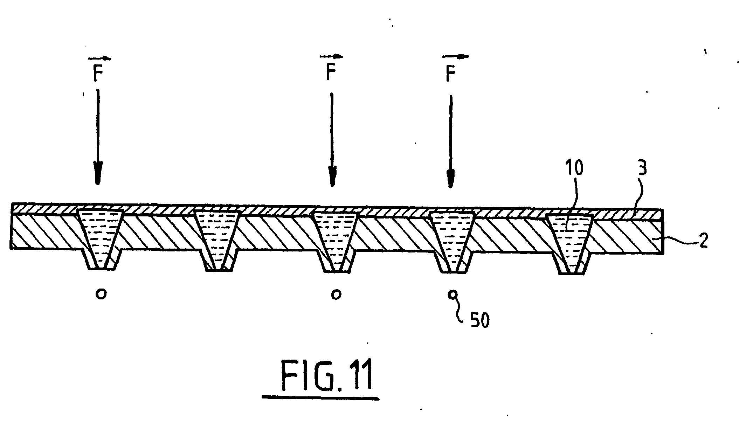

Dans le but de distribuer le ou les réactifs par micro-gouttelettes 50 de manière sélective, c'est-à-dire en sollicitant chaque puits indépendamment les uns des autres, la membrane 3 est sollicitée localement, comme illustré sur la vue en coupe de la figure 11. L'actionnement sélectif des puits 10 de distribution est provoqué par des moyens déformant localement la membrane 3 par application d'une force $\vec{F}$.

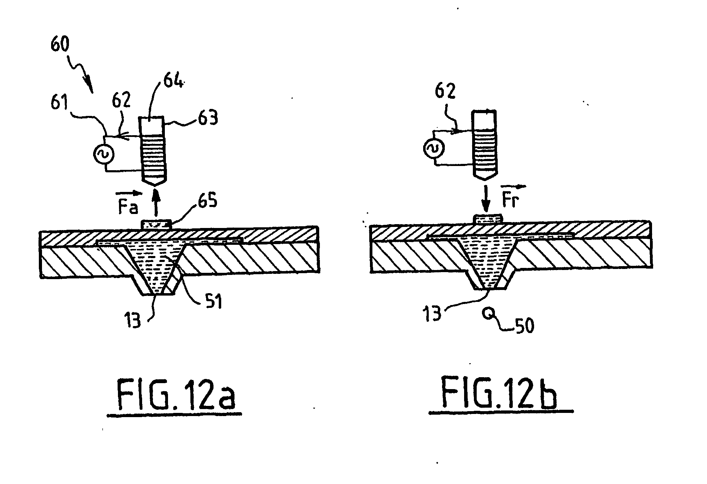

Sur les vues en coupe des figures 12a et 12b, les deux phases d'actionnement d'un puits 10 par déformation locale de la membrane actionnés par des moyens électromagnétiques de déclenchement sont illustrés. Ces moyens sont formés d'un électroaimant élémentaire 60 composé d'un circuit d'excitation 61 générateur de courant, comprenant notamment une bobine 63 couplée à un noyau d'entrefer 64. Les moyens électromagnétiques comprennent également une pastille aimantée 65 fixée sur la membrane 3 au droit du puits et susceptible d'être polarisée par l'électroaimant. La pastille peut alternativement être un aimant permanent, ou en matériau dia ou paramagnétique.

Lorsque le courant 62 circule, le noyau 63 exerce une force d'attraction $\vec{F}_a$ sur la pastille 65. La membrane 3 est alors déformée vers l'électroaimant et le liquide 51 est stoppé à l'écoulement à travers l'orifice 13 (figure 12a). Lorsque le courant 62 circule dans l'autre sens par inversion des pôles, le noyau 63 exerce une force de répulsion $\vec{F}_r$ sur la pastille aimantée 65. La membrane est déformée en creux et le liquide 51 est expulsé sous forme de micro-gouttelettes 50 à travers l'orifice 13 de la buse d'éjection (figure 12b), avec un volume calibré et contrôlé par les dimensions de la buse ainsi que par l'amplitude et la durée du signal électrique appliqué.

Alternativement, l'éjection de gouttelettes peut se faire par application d'impulsions de courant électrique ou par application d'un courant alternatif à la fréquence de résonance propre de la membrane.

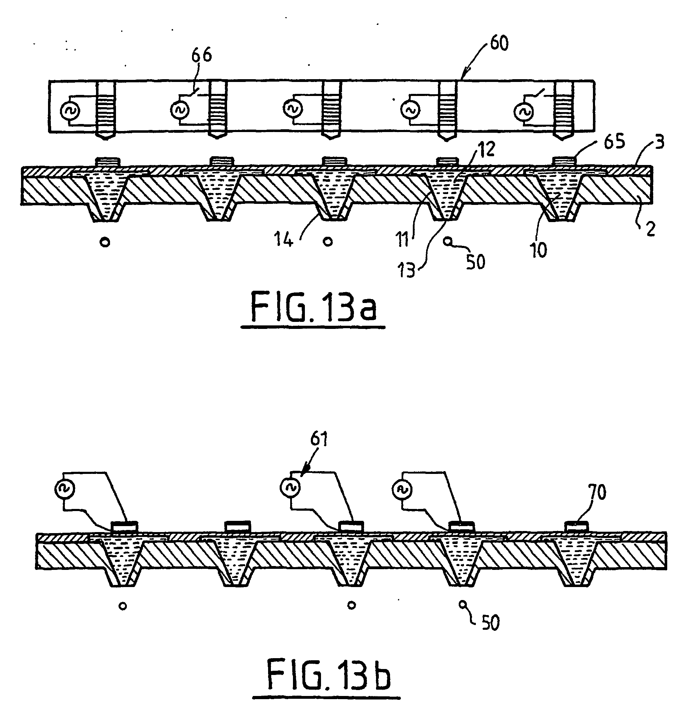

Afin de réaliser une distribution sélective de micro-gouttelettes, c'est-à-dire dont la commande est individualisée au niveau de chaque puits, la déformation locale est réalisée par un ensemble de moyens de déclenchement. Les figures 13a et 13b illustrent en coupe un tel ensemble formé respectivement par des moyens électromagnétiques et des moyens piézoélectriques.

Les moyens électromagnétiques comprennent des électroaimants 60 et des aimants 65, disposés sous forme matricielle au droit de chaque puits 4, et les moyens piézoélectriques comprennent des pastilles piézoélectriques 70, couplées à des circuits d'excitation 61 du même type que ceux utilisés pour les moyens électromagnétiques. Le déclenchement piézoélectrique de micro-gouttelettes 50 (figure 13b) est activé de la même façon que dans le cas de déclenchement électromagnétique (figures 12 et 13a) par fermeture des circuits 61, l'ouverture des interrupteurs 66 arrêtant l'écoulement des gouttelettes 50. Dans le cas de l'utilisation d'actionneurs piézoélectriques, les signaux électriques sont cette fois-ci des différences de potentielles appliquées aux bornes des éléments piézoélectriques.

L'ensemble des moyens de déclenchement est géré par une unité de commande (non représentée) programmable à travers un réseau de couplage ou de multiplexage, dont la mise en oeuvre relève du domaine de compétence de l'homme de l'art. Une telle unité permet de déclencher simultanément ou successivement l'aspiration ou la distribution d'un même réactif ou de réactifs différents à travers les puits.

Il est ainsi possible d'obtenir un débit d'éjection de gouttelettes élevé, par exemple 100 gouttelettes par seconde pour un même puits. Il est ainsi possible d'atteindre le débit de 100 000 pour une tête d'impression de 1000 puits, avec une déformation de la membrane contrôlé par le signal extérieure. En effet, le liquide étant quasiment incompressible, le rapport entre les vitesses de déplacement du liquide entre l'ouverture supérieure et l'orifice d'éjection du puits est inversement proportionnel au rapport des surfaces respectives. Dans l'exemple illustré, le rapport des côtés des orifices étant d'environ 15, la vitesse d'éjection des gouttelettes est donc environ 15 fois supérieure à celle de déformation des membranes.

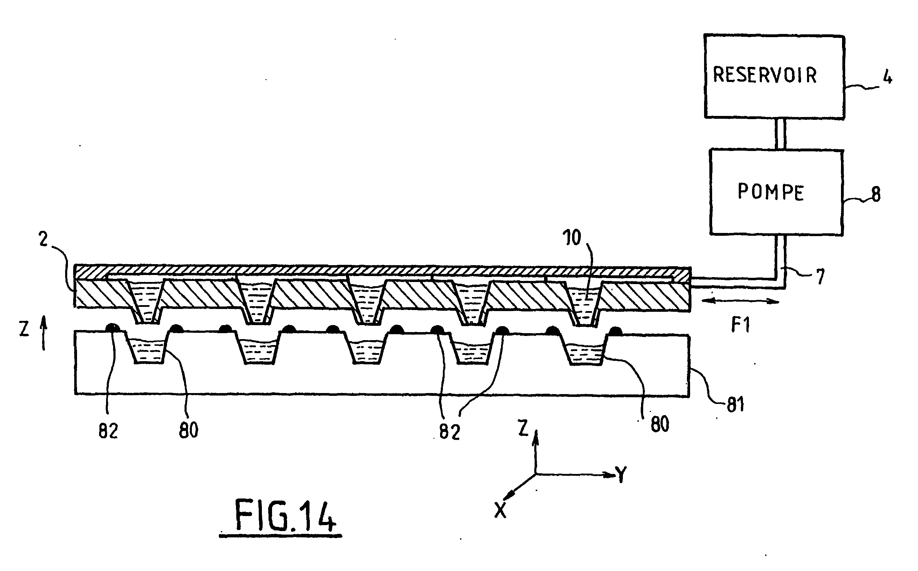

Pour la préparation d'une cartouche de distribution selon l'invention, des réactifs sont aspirés dans une tête de distribution comme illustré sur la vue en coupe de la figure 14. Pour effectuer une telle aspiration, les réactifs sont contenus dans des micro-cuvettes 80 gravées sur une plaque 81 selon des dimensions correspondantes à celle des puits 4. Cette plaque comporte dans l'exemple 9 600 micro-cuvettes espacées de 0,6 mm. Quelques milliers de cuvettes par cm$^2$ peuvent également être réalisées, alors que les plaques de titration couramment utilisées ne comportent actuellement que 1 à 4 cuvettes par cm$^2$.

La plaque est déplacée par réglage micrométrique (direction Z) vers le substrat 2 jusqu'à écraser des joints d'étanchéité en téflon® 82 fixés en bordure des micro-cuvettes 80. D'autres matériaux peuvent être alternativement utilisés pour former les joints : en silicone, vuiton®, en polymère, élastomère ou matériau thermoplastique adapté.

Les réactifs sont alors aspirés dans les puits par le déclenchement d'une pompe 8 montée sur un tuyau d'évacuation 7 couplé aux conduits d'évacuation des puits 4, comme détaillé ci-dessus. La plaquette 81 est également mobile selon les directions XY afin de prévoir d'autres aspirations à partir d'autres micro-cuvettes permettant d'effectuer des mélanges de réactifs dans un même puits. La plaque est placée sur une table de positionnement XYZ (représentée en figure 10).

Suivant les applications, les réactifs peuvent être de type varié : ADNc, oligonucléotides, gènes, cellules, ARNm, protéines, séquences d'ADN ou d'ARN amplifiées par PCR (initiales en terminologie anglaise de « Polymerization Chain Reaction »), antigènes et anticorps, molécules thérapeutiques, sérums, etc.

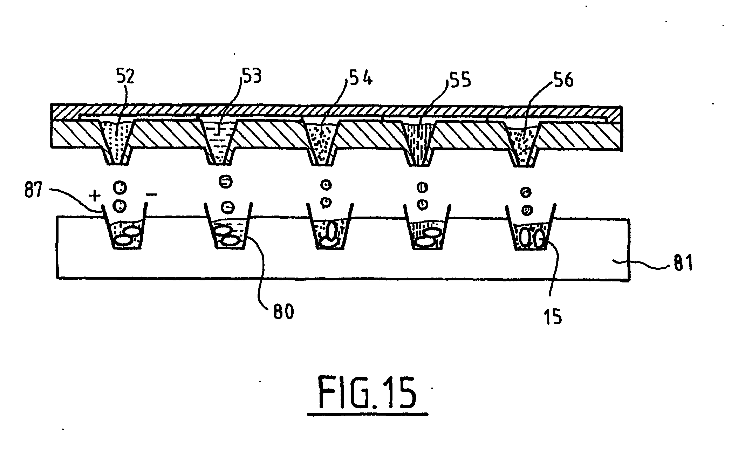

En vue de la préparation de sondes pour réaliser une bio-puce, le dépôt d'oligonucléotides ou de protéines sur une plaquette de Titration ou sur une lame mobile est illustré sur la vue en coupe de la figure 15. Une tête de distribution est alimentée par des réservoirs et l'action de pompes conformément à la figure 10. Des réactifs thérapeutiques différents 52 à 56 sont distribués dans les puits. Des cellules à traiter 15 sont déposées dans les micro-cuvettes d'une plaque de Titration 81. La tête et la plaque sont alignées avec précision à l'aide de repères (non représentés). La plaque de Titration est réalisée par injection d'un matériau thermoplastique, tel que du polyméthacrylate de méthyle ou un polycarbonate.

Les sondes sont formées à la demande par programmation de l'unité de gestion des actionneurs conjointement avec le déplacement de la lame, ce qui permet de former immédiatement les sondes lors de ce déplacement : la durée de formation des sondes 9 est optimisée, permettant de gagner un temps considérable par rapport à la formation par couches successives de l'état de la technique. Le haut débit obtenu avec le système de distribution selon l'invention permet de réaliser des sondes pouvant atteindre par exemple 60 à 70 nucléotides nécessaires pour les applications en génomique fonctionnelle et expressions de gènes. La plaquette ou la lame est déplacé par réglage micrométrique selon des directions XY pour positionner les orifices des éjecteurs en regard avec les zones à imprimer.

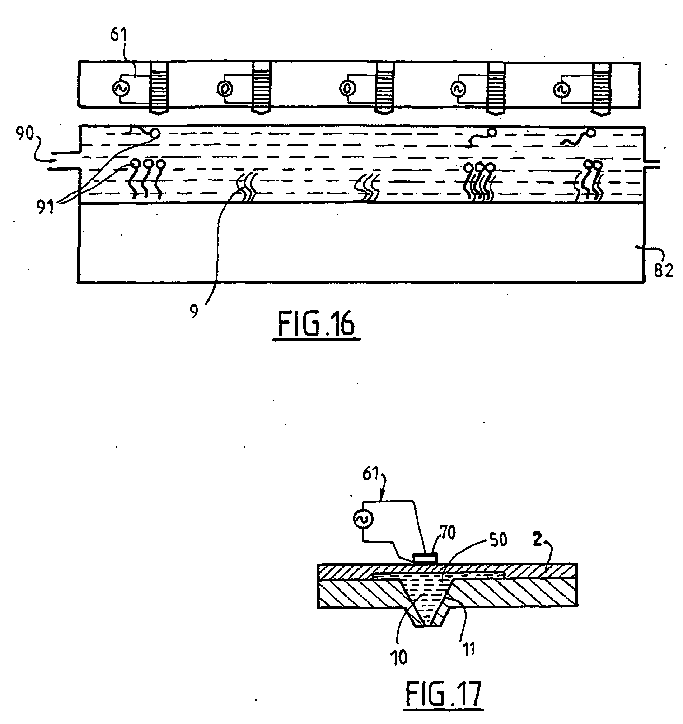

Dans un autre exemple d'application à la détection d'hybridation dans le cadre d'un test génétique, tel qu'illustré en coupe sur la figure 16, la lame 82, préparée selon la figure précédente, est balayée par un flux d'ADN de patient 90. L'ADN du patient est au préalable marqué magnétiquement par greffage de billes 91, utilisé dans l'état de la technique pour immobitiser des molécules dans un champ magnétique ou, alternativement, par fluorescence.

L'avantage supplémentaire de la présente solution est de réutiliser les moyens de déclenchement de distribution pour réaliser la lecture du test par détection, ce qui permet de réduire la quantité de matériel électronique utilisé, alors que, dans l'art antérieur, il est nécessaire de disposer de bobines de lecture dans les cuvettes de titrage.

L'hybridation ou l'interaction immunologique permet de fixer les ADN du patient sur certaines des sondes 9. La détection de ces hybridations est réalisée par formation d'un courant induit dans les circuits 61 au droit des sondes hybridées ou par détection optique. Cette détection est rendue possible du fait de la précision de positionnement des sondes et du fait, dans le cas d'un marquage magnétique, que ce sont les mêmes circuits 61 qui assurent la distribution des sondes et la détection des hybridations.

Dans l'application iono-phorétique, l'administration percutanée de médicaments est réalisée, en référence à la vue en coupe de la figure 17, à partir d'une tête d'impression à un puits 4 de distribution. Dans ce puits, un médicament est distribué conformément à la méthode exposée ci-dessus. Une tension de quelques millivolts est appliquée par un circuit générateur de tension 61 sur une cellule piézoélectrique 70 afin de déformer la membrane 3. Une quantité précalibrée de médicament 50 pendant une durée donnée peut ainsi être administrée. Deux des parois opposées 11 du puits peuvent également être polarisées afin de faciliter l'absorption du médicament en provoquant la dilatation des pores de la peau.

L'invention n'est pas limitée aux exemples de réalisation décrits et représentés.

Les micro-canaux peuvent également être gravés sur le substrat ou sur la membrane. La membrane ou le substrat sont réalisés avec une structure multicouche permettant d'intégrer les micro-canaux de manière tri-dimensionnelle dans des couches différentes. Les micro-canaux sont alors couplés aux puits par des connexions perpendiculaires aux ouvertures supérieures des puits.

Par ailleurs, il est possible d'utiliser d'autres techniques pour déclencher la déformation locale de la membrane, par effet bilame utilisant les effets thermoélastiques ou la magnétostriction : la déformation thermoélastique d'un matériau de type bilame disposé sous forme de barrettes élémentaires au droit des puits sur la membrane. Chaque barrette peut être formée d'une couche de matériau ferromagnétique et d'une couche de matériau conducteur (en Cu, Al, Au, etc.), le matériau ferromagnétique se déformant sous l'effet d'un champ magnétique produit par l'électroaimant. Il est également possible d'agir par des moyens pneumatiques, par électro-vaporisation, ou par l'application de champs électrostatiques.

En outre, les forces de déformation de la membrane ou son échauffement peuvent être créés, par exemple à l'aide de courants de Foucault. La mise en résonance propre peut être effectuée par déformation de la membrane ou par vibration de l'extrémité de la buse.

Par ailleurs, d'autres adaptations sont possibles afin de satisfaire à des applications spécifiques. Par exemple, pour le criblage de cellules tests dans le domaine pharmacologique, en référence à la figure 15, les micro-cuvettes 80 d'une lame de Titration 81 sont équipées d'électrodes polarisées 87. Le test de réactivité des cellules peut être optique, c'est-à-dire par fluorescence et/ou spectroscopie, ou électrique par mesure d'impédance électrique ou électrochimique. Il est également possible d'appliquer, inversement, une différence de potentiel de valeur adaptée entre ces électrodes afin de créer une polarisation dans les cellules et favoriser ainsi l'effet thérapeutique sur des cellules.

Une autre application du système de distribution selon l'invention concerne la distribution de réactifs dans les colonnes de spectrométrie de masse pour la caractérisation de composés, par alimentation parallèle ou séquentielle comme décrit plus haut. Cette application peut également convenir aux chromatographes.

**Revendications**

1. Système de distribution de micro-gouttelettes apte à distribuer quelques dizaines à quelques milliers de micro-gouttelettes parallèlement en une fraction de seconde, comportant un substrat (2) recouvert d'une membrane (3) et des moyens (65, 70) de déformation de la membrane au droit de chaque cavité (10) formée dans le substrat (2), les cavités, gravées dans un matériau constituant le substrat, se présentant sous forme de puits traversant le substrat avec une paroi latérale continue (11) de symétrie axiale, chaque puits débouchant sur la face supérieure et la face inférieure du substrat selon respectivement un orifice d'alimentation (12) et une buse (14) ouverte selon un orifice d'éjection (13), l'orifice d'alimentation présentant une ouverture supérieure à l'orifice (13) de la buse, la buse présentant un rapport entre la hauteur et l'ouverture de la base pouvant aller de 1 à 20, les puits étant configurés sous forme matricielle, avec une densité de puits pouvant atteindre 10 000/cm$^2$ et aptes à fournir un débit d'au moins un million de gouttelettes à la seconde, la membrane ou le substrat présentant une structure multicouche intégrant des micro-canaux d'alimentation des puits de manière tri-dimensionnelle dans des couches différentes, les micro-canaux étant alors couplés aux puits par des connexions perpendiculaires aux ouvertures supérieures des puits.

2. Système de distribution de micro-gouttelettes selon la revendication 1, dans lequel les puits sont organisés, à la place de la configuration matricielle, en configuration circulaire concentrique, en spirale, ou selon une combinaison de ces configurations.

3. Système de distribution de micro-gouttelettes selon l'une quelconque des revendications précédentes, dans lequel l'ensemble des moyens de déformation est géré par une unité de commande programmable à travers un réseau de multiplexage pour déclencher simultanément ou successivement l'aspiration ou l'éjection de réactifs identiques ou différents à travers tous les puits, à travers des blocs de puits présélectionnés ou certains puits présélectionnés.

4. Système de distribution de micro-gouttelettes selon l'une quelconque des revendications précédentes, dans lequel le matériau du substrat ou de la membrane est choisi parmi les matériaux semi-conducteurs, le polysilicium, les verres, les nitrures de silicium, les céramiques, les matériaux thermoplastiques, les élastomères, les résines photosensibles épaisses, et les métaux électro-formés ou êlectro-érodés.

5. Système de distribution de micro-gouttelettes selon la revendication 3 ou 4, dans lequel la gravure du substrat ou de la membrane est choisie parmi la gravure chimique, la RIE, D-RIE, la photolithographie, la gravure par électroérosion ou électroformage, le moulage et la polymérisation, le découpage au laser, les ultrasons, ou la projection d'abrasifs.

6. Système de distribution de micro-gouttelettes selon la revendication 5, dans lequel la membrane est gravée afin de réaliser un réseau de micro-canaux d'alimentation des puits, ces micro-canaux étant couplés en extrémité à au moins un réservoir d'alimentation en réactif.

7. Système de distribution de micro-gouttelettes selon la revendication1, dans lequel tes moyens de déformation locale (65, 70) de la membrane (3) sont constitués par des actionneurs électromagnétiques et piézoélectriques, magnétostrictifs, électrostatiques ou par électro-évaporation.

8. Système de distribution de micro-gouttelettes selon la revendication 1, dans lequel les forces de déformation de la membrane sont créées par mise en résonance propre de la membrane (3) ou par vibration de l'extrémité des buses (14).

9. Système de distribution de micro-gouttelettes selon la revendication1, dans lequel les puits de chaque ligne d'une configuration matricielle sont alimentés par un même réservoir (4) à travers un micro-canal (20) formé dans la membrane parallèlement à la ligne de puits (10) et couplé latéralement à la ligne ou orthogonalement au plan du substrat (2), les réservoirs étant gravés dans la membrane ou disposés à distance et reliés aux micro-canaux par des connexions souples.

10. Système de distribution de micro-gouttelettes selon la revendication1. dans lequel la tête d'impression (1) possède un nombre de lignes égal à un multiple de quatre, afin de procéder à la synthèse de sondes d'ADN à partir des quatre mononucléotides (A, C, T, G) pour la préparation de bio-puces, et dans lequel les puits de chaque ligne sont alimentés par un même réservoir à travers un micro-canal (32) formé dans la membrane (3) parallèlement aux lignes, les réservoirs étant gravés dans la membrane ou disposés à distance et reliés aux micro-canaux par des connexions souples (7).

11. Cartouche de distribution comprenant au moins un système de distribution selon l'une quelconque des revendications précédentes, prérempli de réactifs (51), et des plaquettes de Titration (81) pouvant présenter des micro-cuvettes (80) formées par gravure de type micro-électronique, par usinage, par moulage, et par thermoformage.

12. Kit de distribution comprenant au moins un système de distribution selon l'une quelconque des revendications 1 à 10, équipée d'au moins une pompe d'aspiration (8), et au moins une plaquette de Titration (81), pouvant être préremplies de réactif.

13. Cartouche selon la revendication 11 ou kit selon la revendication 12, dans lequel la plaquette de Titration présente des micro-cuvettes équipées d'électrodes polarisées, le test de réactivité des cellules étant optique ou électrique.

14. Cartouche ou kit selon la revendication 13, dans laquelle une différence de potentiel est appliquée entre ces électrodes afin de créer une polarisation dans les cellules et favoriser l'effet thérapeutique sur des cellules.

15. Application de la cartouche selon la revendication 11 ou du kit selon la revendication 12 à la préparation de bio-puces, par synthèse in situ ou dépôt d'aligonucléotides pré-synthétisés, au criblage sur molécules biologiques, chimiques ou sur cellules, à la préparation de médicaments ou aux tests pharmaceutiques ou de dépistages immunologiques, biochimiques ou génétiques.

16. Application du système de distribution selon l'une quelconque des revendications 1 à 8, à l'administration percutanée de médicaments par iono-phorèse comportant un système d'application d'une différence de potentiel adéquate sur une cellule piézoélectrique (70) pour l'administration d'une quantité calibrée d'au moins un médicament contenu ou formé dans au moins un puits.

17. Application au criblage de cellules tests dans le domaine pharmacologique d'un système de distribution selon l'une quelconque des revendications 1 à 10, dans lequel des médicaments sont déposés sur des cellules contenues dans les micro-cuvettes (80) d'une lame de Titration (81), équipées d'électrodes polarisées, le test de réactivité des cellules étant optique ou électrique.

18. Application selon la revendication précédente, dans laquelle une différence de potentiel de valeur adaptée est appliquée entre ces électrodes afin de créer une polarisation dans les cellules et favoriser ainsi l'effet thérapeutique sur les cellules.

19. Application du système de distribution selon l'une quelconque des revendications 1 à 10, à la filtration sélective par fixation sur les parois des puits d'une tête d'impression de bio-cellules identiques ou différentes ou de composés biochimiques par puits ou par blocs de puits.

20. Application du système de distribution selon la revendication précédente, dans laquelle la tête d'impression est intégrée à l'embout d'une seringue.

21. Application du système de distribution selon l'une quelconque des revendications 1 à 10, à l'alimentation parallèle ou séquentielle de colonnes de spectromètre de masse ou de chromatographes.

**Patentansprüche**

1. System zum Verteilen von Mikrotröpfchen, welches fähig ist, einige Dutzend bis zu einige Tausend Mikrotröpfchen parallel im Bruchteil einer Sekunde zu verteilen, umfassend ein von einer Membran (3) bedecktes Substrat (2) und Mittel (65, 70) zur Deformation der Membran senkrecht zu jeder in dem Substrat (2) ausgebildeten Kavität (10), wobei sich die Kavitäten, in ein das Substrat bildende Material eingeätzt bzw. eingekerbt, in Form von Schächten darstellen, welche mit einer kontinuierlichen lateralen Wand (11) axialer Symmetrie durch das Substrat hindurchgehen, wobei jeder Schacht in der oberen Fläche und der unteren Fläche des Substrats mit einer Versorgungsöffnung (12) bzw. einer offenen Düse (14) entsprechend einer Ausstoßöffnung (13) mündet, wobei die Versorgungsöffnung eine größere Öffnung als die Öffnung (13) der Düse aufweist, wobei die Düse ein Verhältnis zwischen der Höhe und der Öffnung der Düse aufweist, welches von 1 bis 20 gehen kann, wobei die Schächte in Matrixform konfiguriert sind, mit einer Dichte von Schächten, welche 10.000/cm$^2$ erreichen kann und welche in der Lage ist, einen Durchsatz von mindestens einer Million Tröpfchen pro Sekunde bereitzustellen, wobei die Membran oder das Substrat eine Vielschichtstruktur aufweist, welche Mikrokanäle zur Versorgung der Schächte in dreidimensionaler Weise in den verschiedenen Schichten integriert, wobei die Mikrokanäle dann mit den Schächten durch Verbindungen senkrecht zu den oberen Öffnungen der Schächte gekoppelt sind.

2. System zum Verteilen von Mikrotröpfchen gemäß Anspruch 2, wobei die Schächte anstelle der Matrixkonfiguration als Konfiguration von zentrischen Kreisen, als Spirale oder gemäß einer Kombination dieser Konfigurationen angeordnet sind.

3. System zum Verteilen von Mikrotröpfchen nach einem der vorhergehenden Ansprüche, bei welchem die Gesamtheit der Deformationsmittel durch eine programmierbare Steuereinheit über ein Multiplexnetz gesteuert wird, um gleichzeitig oder hintereinander das Ansaugen oder Ausstoßen von gleichen oder verschiedenen Reagenzmitteln über alle Schächte, über vorgewählte Blöcke von Schächten oder bestimmte vorgewählte Schächte auszulösen.

4. System zum Verteilen von Mikrotröpfchen nach einem der vorhergehenden Ansprüche, bei welchem das Material des Substrats oder der Membran aus den Halbleitermaterialien, dem Polysilizium, den Gläsern, den Siliziumnitriden, den Keramiken, den thermoplastischen Materialien, den Elastomeren, den dicken lichtempfindlichen Harzen und den elektrogeformten oder elektrogeätzten Metallen ausgewählt ist.

5. System zum Verteilen von Mikrotröpfchen nach Anspruch 3 oder 4, bei welchem das Kerbverfahren für das Substrat oder die Membran aus dem chemischen Ätzen, dem RIE (reaktiven Ionenätzen), dem D-RIE, der Photolithographie, dem Einkerben durch Elektroätzen oder Elektroformen, dem Spritzgießen und der Polymerisation, dem Laserschneiden, dem Ultraschall oder dem Aufbringen von Schleifmitteln ausgewählt ist.

6. System zum Verteilen von Mikrotröpfchen nach Anspruch 5, bei welchem die Membran mit dem Ziel gekerbt ist, ein Netz von Mikrokanälen zur Versorgung der Schächte zu realisieren, wobei Mikrokanäle an einem Ende mit mindestens einem Behälter zur Versorgung mit Reagenzmittel gekoppelt sind.

7. System zum Verteilen von Mikrotröpfchen gemäß Anspruch 1, bei welchem die Mittel zur lokalen Deformation (65, 70) der Membran (3) durch elektromagnetische und piezoelektrische, magnetostriktive, elektrostatische Aktuatoren oder durch Elektroverdampfen gebildet sind.

8. System zum Verteilen von Mikrotröpfchen nach Anspruch 1, wobei die Deformationskräfte der Membran durch In-Eigenresonsanz-Versetzen der Membran (3) oder durch Vibration des Endes der Düsen (14) hervorgerufen werden.

9. System zum Verteilen von Mikrotröpfchen nach Anspruch 1, bei welchem die Schächte jeder Linie einer Matrixkonfiguration durch einen gleichen Behälter (4) über einen Mikrokanal (20), welcher in der Membran parallel zu der Linie der Schächte (10) ausgebildet ist und welcher lateral mit der Linie oder orthogonal zur Ebene des Substrats (2) gekoppelt ist, versorgt werden, wobei die Behälter in die Membran gekerbt bzw. geätzt sind oder in einer Entfernung angeordnet und mit den Mikrokanälen durch biegsame Verbindungen verbunden sind.

10. System zum Verteilen von Mikrotröpfchen gemäß Anspruch 1, bei welchem der Druckkopf (1) eine Anzahl von Linien gleich einem Vielfachen von vier aufweist, mit dem Ziel, die Synthese von DNS-Sonden ausgehend von vier Mononukleotiden (A, C, T, G) zur Herstellung von Biochips vorzunehmen, und bei welchem die Schächte jeder Linie durch einen gleichen Behälter über einen in der Membran (3) parallel zu den Linien ausgebildeten Mikrokanal (32) versorgt werden, wobei die Behälter in die Membran gekerbt bzw. geätzt sind oder in einer Entfernung angeordnet und mit den Mikrokanälen durch biegsame Verbindungen (7) verbunden sind.

11. Verteilkartusche umfassend mindestens ein System zum Verteilen nach einem der vorhergehenden Ansprüche, vorgefüllt mit Reagenzmitteln (51), und Titerplatten (81), welche Mikroküvetten (80) aufweisen können, welche durch mikroelektronische Gravur, durch maschinelle Fertigung, durch Spritzgießen und durch Thermoformen gebildet sind.

12. Kit zum Verteilen umfassend mindestens ein System zum Verteilen gemäß einem der Ansprüche 1 bis 10, versehen mit mindestens einer Ansaugpumpe (8) und mindestens einer Titerplatte (81), welche mit Reagenzmittel vorgefüllt sein kann.

13. Kartusche nach Anspruch 11 oder Kit nach Anspruch 12, wobei die Titerplatte mit polarisierten Elektroden versehene Mikroküvetten aufweist, wobei der Test der Reaktivität der Zellen optisch oder elektrisch ist.

14. Kartusche oder Kit nach Anspruch 13, wobei eine Potenzialdifferenz zwischen den Elektroden aufgeprägt wird mit dem Ziel, eine Polarisierung in den Zellen zu erzeugen und den therapeutischen Effekt auf die Zellen zu begünstigen.

15. Verwendung der Kartusche nach Anspruch 11 oder des Kits nach Anspruch 12 zur Herstellung von Biochips durch In-Situ-Synthese oder durch Deponieren von vorsynthetisierten Oligonukleotiden, zum Klassieren von biologischen, chemischen Molekülen oder Zellen, zur Herstellung von Medikamenten oder für pharmazeutische Tests oder für immunologische, biochemische oder genetische Erkennungen.

16. Verwendung des Systems zum Verteilen nach einem der Ansprüche 1 bis 8 zur perkutanen Verabreichung von Medikamenten durch Ionophorese umfassend ein System zum Aufprägen einer angemessenen Potenzialdifferenz auf eine piezoelektrische Zelle (70) durch Verabreichung einer kalibrierten Menge mindestens eines Medikaments, welches in mindestens einem Schacht enthalten ist oder gebildet wird.

17. Verwendung eines Systems zum Verteilen nach einem der Ansprüche 1 bis 10 zum Klassieren von Testzellen auf dem Gebiet der Pharmakologie, bei welcher in den Mikroküvetten (80) einer Titerplatte (81) enthaltene Medikamente auf Zellen, welche mit polarisierten Elektroden versehen sind, deponiert werden, wobei der Test der Reaktivität der Zellen optisch oder elektrisch ist.

18. Verwendung nach dem vorhergehenden Anspruch, bei welcher eine Potenzialdifferenz von angepasstem Wert zwischen diesen Elektroden aufgeprägt wird mit dem Ziel, eine Polarisierung in den Zellen zu erzeugen und somit den therapeutischen Effekt auf die Zellen zu begünstigen.

19. Verwendung des Systems zum Verteilen nach einem der Ansprüche 1 bis 10 zur selektiven Filterung von identischen oder verschiedenen Biozellen oder von biochemischen Verbindungen durch Fixierung an den Wänden der Schächte eines Druckkopfs nach Schächten oder nach Blöcken von Schächten.

20. Verwendung des Systems zum Verteilen nach dem vorhergehenden Anspruch, bei welcher der Druckkopf in das Mundstück einer Spritze integriert ist.

21. Verwendung des Systems zum Verteilen nach einem der Ansprüche 1 bis 10 zur parallelen oder sequenziellen Versorgung von Säulen bzw. Feldern eines Massenspektrometers oder von Chromatographen.

**Claims**

1. A system for dispensing microdroplets suitable for dispensing several tens to several thousands of microdroplets in parallel in a fraction of a second, the system comprising a substrate (2) covered by a membrane (3), and means (65, 70) for deforming the membrane in register with each cavity (10) formed in the substrate (2), the cavities, etched in a material constituting the substrate, being in the form of wells passing through the substrate with a continuous side wall (11) of axial symmetry, each well opening out both into the top face and into the bottom face of the substrate, respectively via a feed orifice (12) and a nozzle (14) open via an ejection orifice (13), the feed orifice presenting an opening above the orifice (13) of the nozzle, the nozzle presenting a ratio of nozzle height over nozzle aperture lying in the range 1 to 20, the wells being configured in the form of a matrix with the density of the wells possibly reaching 10,000/cm$^2$, and being suitable for delivering a flow rate of at least one million droplets per second, the membrane and the substrate presenting a multilayer structure integrating well-feed microchannels in three-dimensional manner in different layers, the microchannels then being coupled to the wells by connections perpendicular to the top openings of the wells.

2. A microdroplet dispenser system according to claim 1, in which, instead of being organized in the matrix configuration, the wells are organized in a concentric circular configuration, in a spiral configuration, or in a combination of said configurations.

3. A microdroplet dispenser system according to any preceding claim, in which the set of deformation means is managed by a programmable control unit via a multiplexing network for triggering simultaneous or successive suction or injection of identical or different reagents via all of the wells, through preselected blocks of wells, or through certain preselected wells.

4. A microdroplet dispenser system according to any preceding claim, in which the material of the substrate or of the membrane is selected from semiconductor materials, polysilicon, glasses, silicon nitrides, ceramics, thermoplastic materials, elastomers, thick photosensitive resins, and electroformed or electro-eroded metals.

5. A microdroplet dispenser system according to claim 3 or claim 4, in which the substrate or the membrane is etched by a method selected from chemical etching, RIE, D-RIE, photolithography, etching by electro-erosion or electroforming, molding and polymerization, laser cutting, ultrasound, or projecting abrasives.

6. A microdroplet dispenser system according to claim 5, in which the membrane is etched in order to provide a network of well feed microchannels, said microchannels being coupled at their ends to at least one reagent feed tank.

7. A microdroplet dispenser system according to claim 1, in which the means (65, 70) for locally deforming the membrane (3) are constituted by actuators that are electromagnetic and piezoelectric, magnetostrictive, electrostatic, or by electro-evaporation.

8. A microdroplet dispenser system according to claim 1, in which the forces for deforming the membrane are created by setting the membrane (3) into resonant vibration or by vibrating the ends of the nozzles (14).

9. A microdroplet dispenser system according to claim 1, in which the wells in each row of a matrix configuration are fed from a common tank (4) via a microchannel (20) formed in the membrane parallel to the row of wells (10) and coupled laterally to the row or orthogonally to the plane of the substrate (2), the tanks being etched in the membrane or disposed at a distance and connected to the microchannels by flexible connections.

10. A microdroplet dispenser system according to claim 1, in which the print head (1) possesses a number of rows equal to a multiple of four so as to enable DNA probes to be synthesized from the four mononucleotides (A, C, T, G) for preparing biochips, and in which the wells in each row are fed from a common tank through a microchannel (32) formed in the membrane (3) parallel to the rows, the tanks being etched in the membrane or placed at a distance and connected to the microchannels via flexible connections (7).

11. A dispenser cartridge comprising at least one dispenser system according to any preceding claim, prefilled with reagents (51), and titration plates (81) capable of presenting microbowls (80) formed by microelectronic type etching, by machining, by molding, and by thermoforming.

12. A dispenser kit comprising at least one dispenser system according to any one of claims 1 to 10 fitted with at least one suction pump (8) and with at least one titration plate (81), capable of being prefilled with reagent.

13. A cartridge according to claim 11 or a kit according to claim 12, in which each titration plate presents microbowls fitted with polarized electrodes, the reactivity test of the cells being optical or electrical.

14. A cartridge or a kit according to claim 13, in which a potential difference is applied between the electrodes in order to establish polarization in the cells and to encourage the therapeutic effect on the cells.

15. The use of a cartridge according to claim 11 or of a kit according to claim 12 in preparing biochips by in situ synthesis or by depositing pre-synthesized oligonucleotides, to screen biological or chemical molecules or cells, to prepare medicines, or to perform pharmaceutical or immunological, biochemical, or genetic screening tests.

16. The use of a dispenser system according to any one of claims 1 to 8, in percutaneous administration of medicines by ionophoresis, comprising a system for applying a suitable potential difference to a piezoelectric cell (70) to administer a calibrated quantity of at least one medicine contained or formed in at least one well.

17. The use of a dispenser system according to any one of claims 1 to 10 in screening test cells in the field of pharmacology, in which medicines are deposited on cells contained in the microbowls (80) of a titration plate (81) that are fitted with polarized electrodes, the cell reactivity test being optical or electronic.

18. A use according to the preceding claim in which a potential difference of suitable value is applied between the electrodes in order to create polarization in cells and thus enhance the therapeutic effect on the cells.

**19.** The use of the dispenser system according to any one of claims 1 to 10 in selective filtering by fixing on the walls of the wells of a print head, per well or per block of wells, either biocells that are identical or different, or biochemical compounds.

**20.** A use of a dispenser system according to the preceding claim, in which the print head is integrated in the tip of a syringe.

**21.** The use of a dispenser system according to any one to claims 1 to 10, for parallel or sequential feeding of mass spectrometer columns or chromatographs.

FIG.1

FIG.2

## FIG.3

## FIG.4

14

FIG.5

FIG.6

15

**FIG.7**

**FIG.8**

FIG.9

FIG.10

EP 1 289 660 B1

FIG. 11

FIG.12a

FIG.12b

FIG.13a

FIG.13b

EP 1 289 660 B1

RESERVOIR — 4

POMPE — 8

2

10

7

F1

Z

82    80

82    80

81

Z

Y

X

FIG.14

FIG.15

EP 1 289 660 B1

EP 1 289 660 B1

FIG.16

FIG.17

23